**Europäisches Patentamt**

(19) **European Patent Office**

**Office européen des brevets**

(11) Veröffentlichungsnummer: **0 052 189**
**B1**

(12) **EUROPÄISCHE PATENTSCHRIFT**

(45) Veröffentlichungstag der Patentschrift:
01.08.84

(51) Int. Cl.³: **G 01 C 11/02**

(21) Anmeldenummer: **81106770.1**

(22) Anmeldetag: **29.08.81**

(54) **Photogrammetrische Vorrichtung für Fluggeräte und Raumflugkörper zur Erzeugung einer digitalen Geländedarstellung.**

(30) Priorität: **19.11.80 DE 3043577**

(43) Veröffentlichungstag der Anmeldung:
**26.05.82 Patentblatt 82/21**

(45) Bekanntmachung des Hinweises auf die Patenterteilung:
**01.08.84 Patentblatt 84/31**

(84) Benannte Vertragsstaaten:
**FR GB IT**

(56) Entgegenhaltungen:
**EP - A - 0 026 637**
**EP - A - 0 027 168**
**FR - A - 2 384 407**

(73) Patentinhaber: **Messerschmitt-Bölkow-Blohm Gesellschaft mit beschränkter Haftung, Robert-Koch-Strasse, D-8012 Ottobrunn (DE)**

(72) Erfinder: **Hofmann, Otto, Dr.-Ing., Lerchenstrasse 4, D-8011 Kirchstockach (DE)**

**Beschreibung**

Die Erfindung betrifft eine photogrammetrische Vorrichtung für Fluggeräte und Raumflugkörper zur Erzeugung der Orientierungsdaten der Vorrichtung, des Flugkurses des Vorrichtungsträgers und einer digitalen Geländedarstellung unter Verwendung einer Mehrzahl von quer zur Flugrichtung angeordneten Photohalbleiter-Sensorzeilen gemäss EP-A-0 027 168 (Stand der Technik nach Art 54(3) EPÜ).

Auf der vorgenannten Patentanmeldung desselben Anmelders ist es bekannt, eine Aufnahmevorrichtung der angesprochenen Art mit einer Anordnung von mindestens drei parallel zueinander ausgerichteten Sensorzeilen A, B, C zu versehen. Diese Sensorzeilen erzeugen vom überflogenen Gelände gleichzeitig drei Bildstreifen, jedoch diese aus unterschiedlicher Perspektive. In diesen drei Bildstreifen werden durch die digitale Bildkorrelation eine grosse Zahl identischer Punkte ermittelt, die mit den zugehörigen Perspektivitätszentren Strahlen bilden. Durch die Schnitte sämtlicher zugeordneter Strahlen der drei Bildstreifen und einiger weniger Bodenpasspunkte lassen sich das dreidimensionale Gelände und die Orientierungsparameter der einzelnen Zeilenbilder bestimmen. Diese Bestimmung kann entweder zeilenweise durch Anschluss jeweils eines Zeilenbildes an das bereits bestimmte Modell oder durch gleichzeitige Bestimmung sämtlicher Orientierungsparameter eines Streifenabschnittes in einem Guss durch bekannte Methoden der analytischen Fotogrammetrie und Ausgleichsrechnung erfolgen.

Diese an sich gut brauchbare Vorrichtung soll nun gemäss der Aufgabe der Erfindung dahingehend verbessert werden, dass eine grössere Stabilität und Genauigkeit des rekonstruierten Modells und der Orientierungsparameter erzielbar ist.

Diese Aufgabe ist dadurch gelöst, dass mindestens eine der Sensorzeilen in der Bildebene nicht parallel sondern in einem Winkel zu den anderen Sensorzeilen verläuft und dadurch, dass sich die von ihr erzeugten Bildzeilen des Geländes mit den durch die anderen Sensorzeilen erzeugten Bildzeilen des gleichen Geländes im Grundriss schneiden.

Als besonders vorteilhaft stellt sich für diese die Hauptanmeldung erzänzende Vorrichtung heraus, dass externe Hilfsmittel und Daten eines bereits bekannten digitalen Geländemodells entbehrlich werden, mithin das Verfahren vollkommen homogen und dadurch durchgehend nahezu vollautomatisch ablaufen kann.

Die Erfindung ist anhand der Figuren näher erläutert.
Es zeigen:
Fig. 1 eine Anordnung mit winkligen Sensorzeilen,
Fig. 2, 4, 5 eine Auswahl aus möglichen Varianten,
Fig. 3 die Bildzeilenlage im Gelände.

Zum besseren Verständnis sei zunächst eine allgemeine Erläuterung gegeben. Geht man davon aus, dass ein exakt ebenes Gelände in ideal geradliniger Flugbahn und mit normal ausgerichteter Kamera, d.h. optische Achse vertikal zur Geländeebene und die Sensorzeilen rechtwinklig zur Flugbahn, stets gleiche Flughöhe, überflogen wird, so werden sämtliche in das Gelände projizierten Sensorzeilen A, B, C parallel zueinanderliegen und sich nicht schneiden.

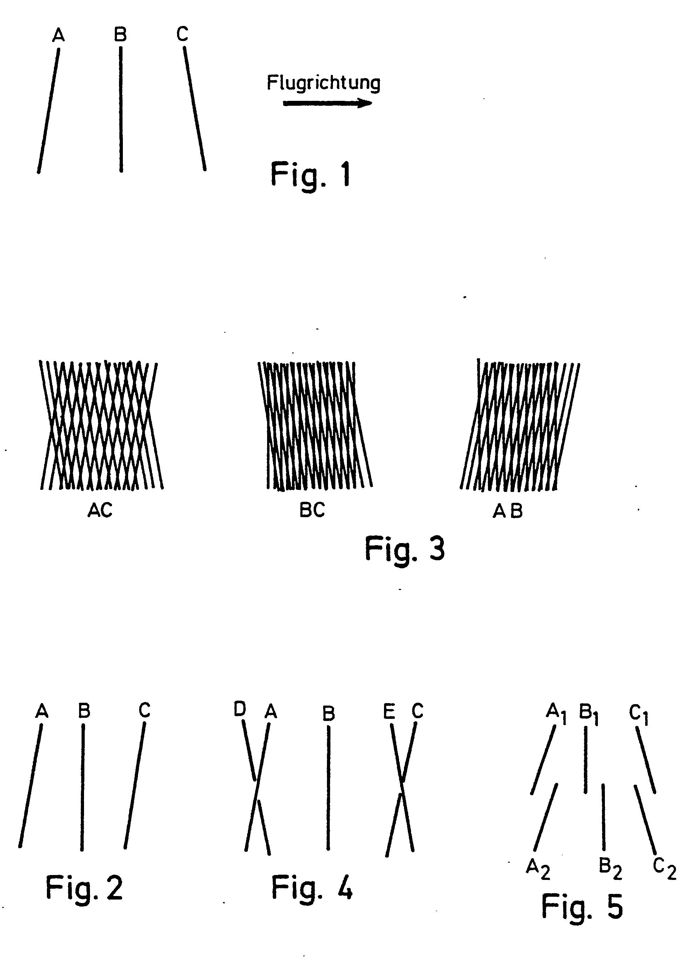

In diesem praktisch nicht vorkommenden Fall gibt es keine unmittelbaren Beziehungen zwischen den drei Bildzeilengruppen. Ordnet man hingegen die drei Sensorzeilen A, B, C winklig zueinander an, wie es in Fig. 1 dargestellt ist, so werden die drei Bildstreifen durch Zeilenfolgen erzeugt, die sich schneiden, siehe hierzu Fig. 3. Durch diesen gegenseitigen Schnitt der Zeilen entsteht ein eindeutiger sich gegenseitig stabilisierender Zeilenverband, dessen Stabilität um so grösser ist, je grösser der Schnittwinkel ist, wobei dieser allerdings aus anderen hier nicht interessierenden Gründen nicht zu gross gemacht werden sollte.

Wie aus der Fig. 3 zu entnehmen ist, schneiden sich beispielsweise mehrere Zeilen des Streifens A mit mehreren Zeilen des Streifens C. Die daraus resultierenden Bildstrahlenschnittbedingungen stabilisieren und bestimmen die gegenseitige Lage der parallelen Zeilen des A-Streifens und C-Streifens. Gleiches gilt für die Kombinationen A/B und B/C. Sämtliche daraus resultierenden Strahlenschnittbedingungen führen mit grosser Übereinstimmung zur Ermittlung der Orientierungsparameter, die sämtlichen drei Bildstreifen gemeinsam sind.

Diese Ermittlung der Orientierungsparameter findet in bekannter Weise durch Auflösung eines Gleichungs-Systems statt, dass sämtliche Orientierungsparameter der Zeilenbilder eines bestimmten Streifenabschnittes als Unbekannte enthält. Die hier vorgeschlagene Anordnung ist besonders für die Lösung des Anfangsproblems wichtig, d.h. die Gewinnung der Anfangsorientierung über mindestens eine Basislänge am Anfang des Geländestreifens, so wie es in EP-A-0 027 168 beschrieben ist.

Die in der Fig. 1 dargestellte Anordnung dreier Sensorzeilen A, B, C ist nicht die einzig mögliche, auch andere Zeilenkombinationen sind denkbar, besonders wenn sich die Zeilen aus mehreren Sensorabschnitten zusammensetzen. Erforderlich ist nur, dass wenigstens eine Zeile winklig zu den anderen verläuft, so dass sich die von ihr erzeugten Bildzeilen, mit den von den anderen Sensoren erzeugten Bildzeilen im Grundriss schneiden, siehe Fig. 2.

Die in Fig. 1 dargestellte Anordnung kann für höhere Anforderungen noch verbessert werden, indem der Schwierigkeit entgegengewirkt wird, dass die durch diese Zeilen A, B, C und das Projektionszentrum im Aufriss erzeugten Konvergenzwinkel der Bildstrahlen nicht gleich und konstant sind. Damit ändert sich längs der Zeilen das Basisverhältnis bzw. der Konvergenzwinkel und damit auch die Genauigkeit der Geländereliefbestimmung. Die Anordnung aus Fig. 4 kann dem durch zusätzlich hinzugefügte Sensorzeilen D, E entgegenwirken. Jede zusätzliche Sensorzeile erhöht zwar die Genauigkeit des Systems, vergrössert aber auch den Geräte- und Rechenaufwand, so dass auch hier Grenzen gesetzt sind.

Sehr vorteilhaft können auch Sensorzeilenanordnungen nach der in Fig. 5 dargestellten Art sein, und zwar da, wo bisher eine Gesamtsensorzeile aus mehreren Sensor-Chips besteht und mit Hilfe mehrerer Objektive oder Strahlenteiler zusammengesetzt wird. Bei dem in Fig. 5 dargestellten Beispiel bestehen die Zeilen aus abgesetzten Einzelabschnitten $A_1$, $A_2$, $B_1$, $B_2$, $C_1$, $C_2$, die durch Sensor-Chips realisiert werden. Es können in diesem Fall die Sensoren $A_1$, $A_2$, $B_1$, $B_2$, $C_1$, $C_2$ in der Bildebene eines einzigen Objektivs angeordnet werden. Aus praktischen Erwägungen heraus, vor allem aber um einen durch Höhenunterschiede des Geländes möglichst wenig verzerrten Bildstreifen zu erhalten, wird man die mittlere Bildzeile B respektive deren Teilstücke $B_1$, $B_2$... $B_n$ rechtwinklig zur Flugrichtung und in der optischen Achse oder möglichst in ihrer Nähe anordnen.

### Patentansprüche

1. Photogrammetrische Vorrichtung für Fluggeräte und Raumflugkörper zur Erzeugung der Orientierungsdaten der Vorrichtung, des Flugkurses des Vorrichtungsträgers und einer digitalen Geländedarstellung unter Verwendung einer Mehrzahl von quer zur Flugrichtung angeordneten Photohalbleiter-Sensorzeilen, dadurch gekennzeichnet, dass mindestens eine der Sensorzeilen (A, B, C) in der Bildebene in einem Winkel zu den anderen Sensorzeilen (A, C) verläuft und dass sich die von dieser Sensorzeile (B) erzeugten Bildzeilen des Geländes mit den durch die anderen Sensorzeilen (A, C) erzeugten Bildzeilen des gleichen Geländes im Grundriss schneiden.

2. Vorrichtung nach Anspruch 1, dadurch gekennzeichnet, dass die Sensorzeilen (A, B, C) aus abgesetzten Teilabschnitten ($A_1$, $A_2$, $B_1$, $B_2$, $C_1$, $C_2$) zusammengesetzt sind.

3. Vorrichtung nach Anspruch 1, dadurch gekennzeichnet, dass zum Entgegenwirken von nicht gleichen und konstanten Konvergenzwinkeln der Bildstrahlen zu den Sensorzeilen (A, B, C) zusätzlich angeordnete Sensorzeilen (D, E) vorhanden sind, wobei diese winklig den äusseren Sensorzeilen (A, C) zugeordnet sind.

4. Vorrichtung nach einem oder mehreren der vorhergehenden Ansprüche, dadurch gekennzeichnet, dass die mittlere Sensorzeile (B) bzw. deren Teilabschnitte ($B_1$, $B_2$...$B_n$) rechtwinklig zur Flugrichtung und in der optischen Achse angeordnet ist bzw. sind.

### Claims

1. A photogrammetrical device for flying apparatus and space vehicles for the production of the orientation data of the device, of the flight course of the device carrier and of a digital terrain representation using a plurality of lines of photo-semiconductor sensors arranged transversely to the flight direction, characterised in that at least one of the lines of sensors (A, B, C) extends in the image plane at an angle to the other lines of sensors (A, C) and in that the image lines of the terrain which are produced by this row of sensors (B) intersect in ground plan with the image lines of the same terrain which are produced by the other lines of sensors (A, C).

2. A device according to claim 1, characterised in that the lines of sensors (A, B, C) are composed of stepped partial sections ($A_1$, $A_2$, $B_1$, $B_2$, $C_1$, $C_2$).

3. A device according to claim 1, characterised in that, to counteract angles of convergence of the image rays relative to the lines of sensors (A, B, C) which are not equal and constant, additionally-arranged lines of sensors (D, E) are present, wherein these are associated angularly with the outer lines of sensors (A, C).

4. A device according to one or more of the preceding claims, characterised in that the middle line of sensors (B) or alternatively the partial sections ($B_1$, $B_2$...$B_n$) thereof, is or respectively are arranged at right angles to the flight direction and in the optical axis.

### Revendications

1. Dispositif photogrammétrique pour aéronefs et satellites en vue de la production des données d'orientation du dispositif, du cap du vecteur portant le dispositif et d'une représentation numérique du terrain en utilisant plusieurs lignes de capteurs à semiconducteurs photoélectriques disposés transversalement au sens du vol, caractérisé par le fait qu'au moins l'une des lignes de capteurs (A, B, C) dans le plan d'images est disposée angulairement par rapport aux autres lignes de capteurs (A, C) et que les lignes d'images du terrain fournies par cette ligne de capteurs (B) se coupent avec les lignes d'images du même terrain fournies par les autres lignes de capteurs (A, C) en projection horizontale.

2. Dispositif selon la revendication 1, caractérisé par le fait que les lignes de capteurs (A, B, C) sont constituées par des sections partielles décalées ($A_1$, $A_2$, $B_1$, $B_2$, $C_1$, $C_2$).

3. Dispositif selon la revendication 1, caractérisé par le fait que pour remédier aux angles de convergence, ni égaux ni constants, des rayons d'images par rappaort aux lignes de capteurs (A, B, C) il est prévu des lignes de capteurs (D, E) disposées en plus, ces derniers étant associés angulairement aux lignes de capteurs externes (A, C).

4. Dispositif selon l'une ou plusieurs des revendications précédentes, caractérisé par le fait que la ligne de capteurs médiane (B) ou ses sections partielles ($B_1$, $B_2$...$B_n$) est ou sont disposées à angle droit par rapport au sens du vol et dans l'axe optique.

Flugrichtung →

Fig. 1

A B C

AC BC AB

Fig. 3

A B C

Fig. 2

D A B E C

Fig. 4

$A_1$ $B_1$ $C_1$

$A_2$ $B_2$ $C_2$

Fig. 5